# EUROPÄISCHE PATENTSCHRIFT

(11) **EP 2 047 141 B1**
(45) Veröffentlichungstag und Bekanntmachung des Hinweises auf die Patenterteilung: **17.11.2010**
(21) Anmeldenummer: 07725566.9
(22) Anmeldetag: 25.05.2007
(51) Int. Cl.: F16H 55/30

(54) **KETTENNUSS MIT HÖHERER TRAGKRAFT**
CHAIN SPROCKET WITH INCREASED LOAD CAPACITY
PIGNON À CHAÎNE, À FORCE PORTANTE ÉLEVÉE

(30) Priorität: 01.08.2006 DE 102006036162
(43) Veröffentlichungstag der Anmeldung: 15.04.2009
(73) Patentinhaber: Stahl CraneSystems GmbH, 74653 Künzelsau (DE)
(72) Erfinder: WEINGÄRTNER, Jürgen, 74643 Kocherstetten (DE); FINZEL, Manfred, 74653 Künzelsau (DE); DIETRICH, Volker, 74632 Neuenstein (DE)
(74) Vertreter: Rüger, Barthelt & Abel Patentanwälte
(86) Internationale Anmeldenummer: PCT/EP2007/004670
(87) Internationale Veröffentlichungsnummer: WO 2008/014835

(56) Entgegenhaltungen:
- EP-A1- 0 505 019
- DD-A1- 244 609
- DE-A1- 3 201 210
- DE-A1- 4 130 073
- DE-U- 6 921 196
- DE-U1- 8 631 190

## Beschreibung

Sogenannte Rundgliederketten setzen sich aus einzelnen miteinander verketteten Rundgliedern zusammen. Jeweils benachbarte Kettenglieder sind gegeneinander bezüglich der Längsachse der Kette um 90° gedreht. Jedes Kettenglied einer Rundgliederkette besteht aus einem gebogenen Drahtabschnitt, dessen freie Enden stumpf miteinander verschweißt sind.

In der Draufsicht auf die Flachseite setzt sich das Kettenglied aus zwei geraden, zueinander parallelen Abschnitten zusammen, die beide an jedem Ende in Halbkreisbögen übergehen. Der Radius der beiden Halbkreisbögen entspricht dem Mittenabstand der geraden Abschnitte. Die Projektion eines solchen flachliegenden Kettenglieds einer Rundgliederkette auf eine Ebene parallel zur Flachseite des Kettenglieds wird durch zwei Linien begrenzt, von denen die eine die Außenlinie ist und die andere die Innenlinie. Die Außenlinie setzt sich folglich aus zwei geraden Abschnitten, die zueinander parallel sind, und zwei Halbkreisbögen zusammen, deren Durchmesser dem Abstand der geraden Abschnitte entsprechen. Die Innenlinie verläuft an allen Stellen im gleichen Abstand zur Außenlinie, entsprechend dem Drahtdurchmesser.

Derartige Rundgliederketten werden zum Bewegen von Werkstücken oder Mitnehmern verwendet. Dies können z.B. Paletten sein, die längs seines Förderweges transportiert werden oder aber sie können als Lastaufnahmemittel von sogenannten Kettenzügen verwendet werden.

Der Antrieb der Rundgliederketten geschieht über Kettennüsse, die formschlüssig mit den Kettengliedern zusammenwirken. Dabei unterscheidet man zwischen stehenden Kettengliedern und liegenden Kettengliedern. Diese Unterscheidung geschieht aus der Sicht der Kettennuss. Unter einem liegenden Kettenglied wird ein Kettenglied verstanden, von dem eine Flachseite der Drehachse der Kettennuss zugekehrt ist. Ein stehendes Kettenglied ist ein solches Kettenglied, bei der die Flachseiten auf der Drehachse der Kettennuss senkrecht stehen.

Bei den bislang üblichen Kettennüssen werden lediglich die liegenden Kettenglieder dazu verwendet, die Kraft von der Kettennuss auf die Kette zu übertragen. Die stehenden Kettenglieder werden für die Kraftübertragung für die Kettennuss und Rundgliederketten bislang nicht eingesetzt.

Aus der gattungsgemäßen DE 86 31 190 U1 ist eine Kettennuss bekannt, die an die Änderung der Kettenteilung infolge von Verschleiß angepasst ist.

Beim Umlauf der unter Last stehenden Kette über die Kettennuss tritt zwischen benachbarten Kettengliedern eine Bewegung auf. Die Bewegung entsteht, weil die an sich unter Last gestreckte Kette durch die Kettennuss in eine Kreisbahn gezwungen wird.

Die Relativbewegung zwischen den Kettengliedern verursacht dort einen Reibverschleiß mit der Folge, dass sich an den betreffenden Stellen die Dicke des Kettengliedes vermindert. Unter Dicke des Kettengliedes versteht der Fachmann den Durchmesser, den der Draht an der betreffenden Stelle hat.

Zufolge der Änderung der Kettenglieddicke wird die Kette länger, d.h. ihre Teilung stimmt nicht mehr mit der Teilung der Kettennuss überein. Um dem Rechnung zu tragen, sind bei der bekannten Kettennuss die Kettentaschen für die stehenden Kettenglieder speziell geformt.

Die Kettentaschen für die stehenden Kettenglieder bilden eine in Umfangsrichtung der Kettennuss verlaufende Rille, die die Kettentaschen für die liegenden Kettenglieder durchsetzt. Der Grund dieser Rille beschreibt im weitesten Sinne ein reguläres n-Eck, wobei n gleich der Anzahl der Kettentaschen für die liegenden Kettenglieder ist. Die Seiten dieses regulären N-Ecks sind jeweils konkav liegende Kreisbobenabschnitte mit einem konstanten Krümmungsradius. Der Taschenboden weist längs seines Verlaufes keine Krümmungsänderung auf. Er geht lediglich am Ende in eine abgerundete Ecke des n-Ecks über, an der der nächste Taschenboden für die benachbarte Kettentasche eines stehenden Kettengliedes beginnt. Diese Ecke kann im weitesten Sinne auch als Zahn verstanden werden. Die Zahnspitze liegt mittig, d.h. zentriert in der Kettentasche für das liegende Kettenglied. Er endet deutlich unterhalb einer Ebene, die durch die der Drehachse benachbarte Flachseite des Kettenglieds definiert ist.

Fig. 2 dieser Druckschrift zum Stand der Technik zeigt die Verhältnisse zwischen dem stehenden Kettenglied und der zugehörigen Kettentasche bei Verwendung einer unbenutzten Rundgliederkette. Die benachbarten liegenden Kettenglieder halten das stehende Kettenglied im Abstand zum Taschenboden der Kettentasche für das betreffende stehende Kettenglied. Erst wenn sich infolge der Abnutzung die Kette längt, tritt eine geringfügige Verkantung des stehenden Kettenglieds auf, mit der Folge, dass sich das Kettenglied mit seinem Bug, der in Lastrichtung zeigt, an dem Taschenboden anlegt.

Die Tangente an der Berührungsstelle zwischen Taschenboden und Außenlinie des Kettenglieds verläuft unter einem sehr spitzen Winkel zu der Längsachse des stehenden Kettenglieds, womit über die punktförmige Berührungsstelle in Verbindung mit dem Angriffswinkel praktisch keine Krafteinleitung von der Kettennuss auf die Rundgliederkette bzw umgekehrt möglich ist.

Die bekannte Kettennuss ist damit nicht in der Lage, die Kette in einem höheren Maße auszunutzen als dies unter Berücksichtigung der Sicherheitsgrenzwerte den Normen entspricht. Die Normen gehen davon aus, dass die höchste Kettenbelastung im Bereich der Kettennuss auftritt, womit die Belastung an dieser Stelle den zulässigen Grenzwert festlegt.

Insoweit beschreibt der Stand der Technik eine Kettennuss zum Antreiben von Gliederketten in Form von Rundgliederketten. Die Kettennuss weist einen Grundkörper auf, in dessen Außenumfangsfläche Kettentaschen angeordnet sind, die dazu eingerichtet sind die liegenden Kettenglieder aufzunehmen und Kraft von der Kettennuss auf die liegenden Kettenglieder zu übertragen.

Es sind ferner Kettentaschen in der Außenumfangsfläche vorhanden, die dazu eingerichtet sind die stehenden Kettenglieder aufzunehmen, wobei die Anzahl der Kettentaschen für die liegenden Kettenglieder der Anzahl der Kettentasche für die stehenden Kettenglieder entspricht. Jede Kettentasche weist für die stehenden Kettenglieder Auflagebereiche auf, auf denen sich das jeweilige Kettenglied mit einer Stelle an seinem Bug auflegen kann. Die Kettentaschen für die stehenden und die liegenden Kettenglieder überschneiden sich. Es sind ferner Zähne vorhanden, die zwischen benachbarten Kettengliedern für die liegenden Kettenglieder vorhanden sind. Diese Zähne sind dazu eingerichtet Kraft von der Kettennuss auf die liegenden Kettenglieder zu übertragen.

Eine Kraftübertragung von der Kettennuss auf das stehende Kettenglied ist nicht vorgesehen.

Ausgehend hiervon ist es Aufgabe der Erfindung, eine Kettennuss zu schaffen, die eine höhere Belastung einer Gliederketten aus einem vorgegebenen Material zulässt, verglichen mit der Kombination dieser Gliederkette mit einer Kettennuss nach dem Stand der Technik.

Die Konstrukteure bei der Anmelderin haben herausgefunden, dass eine höhere Belastung/Ausnutzung der Kette möglich wird, wenn zur Kraftübertragung von der Kettennuss auf die Kette bzw umgekehrt auch die stehenden Kettenglieder mit herangezogen werden. Um dies zu erreichen muss die lastaufnehmende Zahnflanke, an der sich unter Last das stehende Kettenglied mit seinem Bug anlehnt, in besonderer Weise konfiguriert werden.

Die neue Kettennuss ist wie die Kettennuss aus dem Stand der Technik zum Antreiben von Rundgliederketten oder Profilstahlketten, insbesondere von Kettenzügen vorgesehen. Jedes Kettenglied der Gliederkette besteht aus einem gebogenen Drahtabschnitt und weist eine ebene Gestalt auf. Die Gestalt setzt sich aus zwei zueinander parallelen Abschnitten und zwei Halbkreisbögen zusammen.

Die erfindungsgemäße Kettennuss weist einen Grundkörper mit einer Außenumfangsfläche und einer zu der Außenumfangsfläche zentrischen Drehachse auf.

In dem Grundkörper sind Kettentaschen enthalten, die sich an der Außenumfangsfläche befinden und die dazu eingerichtet sind, die liegenden Kettenglieder aufzunehmen, um Kraft von der Kettennuss auf die liegenden Kettenglieder zu übertragen.

Weiterhin enthält die Kettennuss Kettentaschen, die sich ebenfalls an der Außenumfangsfläche befinden, und die dazu eingerichtet sind, die stehenden Kettenglieder aufzunehmen. Die Anzahl der Kettentaschen für die stehenden Kettenglieder entspricht der Anzahl der Kettentaschen für die liegenden Kettenglieder. Jede Kettentasche für die stehenden Kettenglieder weist Auflagebereiche auf, auf denen sich das jeweilige Kettenglied zumindest mit einem an den Kreisbogen anschließenden Teil seines geraden Abschnittes auflegen kann. Die Kettentaschen für die stehenden Kettenglieder sind jeweils zwischen benachbarten Kettentaschen für liegende Kettenglieder angeordnet und überschneiden sich mit diesen.

Zwischen benachbarten Kettentaschen für stehende Kettenglieder stehen Radialzähne vor, die dazu eingerichtet sind, Kraft von der Kettennuss auf die stehenden Kettenglieder zu übertragen. Jeder der Zähne ist von zwei in Umfangsrichtung zeigenden Zahnflanken begrenzt.

Eine der beiden Zahnflanken jedes Zahns ist die lastaufnehmende Zahnflanke, d.h. jene Zahnflanke, an der sich bei entsprechender Belastung das stehende Kettenglied anlegt. Diese Zahnflanke zeigt entgegen der Lastrichtung, die in der Gliederkette bei Belastung wirkt.

Jede lastaufnehmende Zahnflanke definiert eine Zahnflankenkrümmungslinie, die in der Symmetrieebene liegt, die durch die Kettentasche für die stehenden Kettenglieder läuft und die auf der Drehachse senkrecht steht. Diese Symmetrieebene fällt mit der Symmetrieebene des stehenden Kettengliedes zusammen und verläuft zwischen den beiden seitlichen Flankenflächen, die durch das stehende Kettenglied begrenzt sind. Unter Flankenfläche ist dabei jene Ebene zu verstehen, die das Kettenglied an der jeweiligen Flanke tangential berührt.

Die Lage der lastaufnehmenden Zahnflanke ist derart bemessen, dass die Zahnflankenkrümmungslinie in der Symmetrieebene einen Abstand von der in Lastrichtung zeigenden Außenlinie des Halbkreisbogens aufweist, der zu einem Kettenglied gehört, das in der Kettentasche angeordnet ist. Dieser Abstand ist dann vorhanden, wenn die beiden benachbarten liegenden Kettenglieder zentriert und ohne Einwirkung einer äußeren Kraft in ihren zugehörigen Kettentaschen liegen.

Aufgrund des Abstands zwischen der Zahnflankenkrümmungslinie und der Außenlinie des Halbkreisbogens, die beide in derselben die Drehachse rechtwinkelig schneidenden Ebene liegen, entsteht zwischen dem Bug des Kettenglieds und der benachbarten Zahnflanke ein bogenförmig gekrümmter und keilförmiger Spalt, dessen Breite sich in Richtung auf die Zahnspitze vergrößert. Dieser Spalt ist so bemessen, dass er sich beim Überschreiten einer vorgegebenen Kraft, die in der Gliederkette wirkt, schließt. Dieses Schließen erfolgt zufolge einer elastischen Verformung des entsprechenden Halbkreisbogens des Kettenglieds.

Um eine möglichst gute Kraftübertragung auf das stehende Kettenglied zu erzielen, sollte der Zahn eine möglichst große, radiale Höhe aufweisen. Allerdings wird die radiale Höhe einerseits durch die üblicherweise verwendeten Kettenauswerfer an Kettenzügen begrenzt und andererseits auch dadurch begrenzt, dass das tangentiale Ablaufen der Gliederkette von der Kettennuss nicht behindert werden darf. Günstige Verhältnisse ergeben sich, wenn der Zahn über eine Fläche, die durch die der Drehachse benachbarte Flankenfläche des liegenden Kettengliedes definiert ist, in die der Zahn ragt, eine Höhe aufweist, die zwischen dem 0,16-fachen und dem 0,75-fachen der Dicke des Kettengliedes liegt.

Die Zahnhöhe ist nämlich, wie ohne weiteres einzusehen ist, von der Dicke des für die Kettenglieder verwendeten Drahts abhängig.

Eine gute Kraftübertragung zwischen der Rundgliederkette und der Zahnflanke wird erreicht, wenn die Zahnflanke biaxial gekrümmt ist. Dadurch ergibt sich wegen der großen Anlagefläche eine günstige Kraftverteilung sowohl in der Zahnflanke als auch in dem Bug des Kettenglieds.

Unter biaxial gekrümmt soll hierbei eine Krümmung verstanden werden, deren zugehöriger Krümmungsmittelpunkt auf einer Linie liegt, die parallel zur Zahnflankenkrümmungslinie in einem entsprechenden Abstand verläuft. Der gegenüber dieser Linie gemessene Krümmungsradius ist vorteilhafterweise nicht kleiner als der halbe Durchmesser des Drahtes, aus dem das Kettenglied hergestellt ist.

Der Abstand zwischen dem Bug des Kettengliedes und der Lastaufnehmenden Zahnflanke bzw. zwischen der Außenlinie und der Zahnflankenkrümmungslinie lässt sich über die Approximation mittels zweier Schmiegkreise ermitteln. Der eine Schmiegkreis ist eine Approximation der Außenlinie des Halbkreisbogens eines in die Kettennuss eingelegten stehenden Kettengliedes. Hierdurch wird ein Schmiegkreismittelpunkt definiert.

Die zweite Approximation ist ein Kreis, der die Zahnflankenkrümmungslinie approximiert und somit einen weiteren Mittelpunkt definiert. Der Mittelpunkt des Zahnflankenschmiegkreises ist gegenüber dem Mittelpunkt des Kettengliedschmiegkreises in Lastrichtung verschoben. Der Betrag der Verschiebung ist wiederum abhängig von der Drahtdicke für das Kettenglied und der Länge des Kettenglieds.

Zweckmäßigerweise liegen die beiden Mittelpunkte der Schmiegkreise auf einer Geraden, die zu den geraden Abschnitten des stehenden Kettengliedes parallel verläuft.

Je nach Art des Kettenglieds kann auch ein spitzwinkliger Verlauf vorteilhaft sein.

Die Zahnflankenkrümmungslinie kann exakt kreisförmig sein, was die Herstellung der Kettennuss vereinfacht. Die Zahnflankenkrümmungslinie kann auch denselben Verlauf aufweisen, den die Außenlinie definiert, wenn das Kettenglied einer bestimmten, beispielsweise der Nennlast ausgesetzt ist. Der Verlauf ist dann bei genauerer Betrachtung angenähert parabelförmig, was jedoch nach wie vor bedeutet, dass auch hier über die Strecke der Zahnflankenkrümmungslinie ein Schmiegkreis definiert werden kann. Der Schmiegkreis ist dann definiert als jene Kreislinie, bei der die Abstände zu der Zahnflankenkrümmungslinie minimal sind, d.h. die Kreislinie ist eine Regressionslinie. Die Abstände sind hierbei auf den entsprechenden Radien des Schmiegkreises gemessen.

Um eine möglichst große Lebensdauer der Kettennuss zu erzielen, ist es vorteilhaft, wenn sie aus einem gehärteten Stahl besteht, vorzugsweise einsatzgehärtet, um eine gewisse Nachgiebigkeit und Anpassungsfähigkeit zu erhalten, während andererseits die Abriebfestigkeit hoch bleibt.

Durch die Kettennuss führt vorteilhafterweise eine Wellenbohrung hindurch, mit der sie auf die Ausgangswelle eines Getriebemotors drehfest aufsteckbar ist.

Die Kettentaschen für die liegenden Kettenglieder sind wannenförmig gestaltet.

Die Kettentaschen für die stehenden Kettenglieder sind von der lastaufnehmenden Zahnflanke, einer von der lastaufnehmenden Zahnflanke abliegenden Zahnflanke eines benachbarten Zahns und einem Taschenboden begrenzt.

Der Taschenboden kann ebenfalls gekrümmt sein, wobei die Krümmungsachse rechtwinklig zur Drehachse liegt. Eine andere Möglichkeit besteht darin, einen Taschenboden zu verwenden, der eben ist und der an seinen an die Lastaufnehmende Zahnflanke angrenzenden Bereich in eine entsprechende Krümmung übergeht, wie sie oben definiert ist.

Um eine übermäßige Belastung des Kettenglieds im Bereich der Schweißstelle zu vermeiden, kann der Taschenboden eine Vertiefung enthalten, durch die die Schweißnaht des Kettengliedes freigestellt ist.

Der Radius des Schmiegkreises der Zahnflankenkrümmungslinie kann gleich oder größer sein als der Radius des Schmiegkreises der Außenlinie des Halbkreisbogens. Die Lage der Mittelpunkte zueinander muss so gewählt werden, dass der Taschenboden tangential ohne Knick in die Zahnflanke einmündet. Das Verhältnis der beiden Radien ist wiederum abhängig vom Drahtdurchmesser bzw. der Größe des Kettengliedes und kann im Bereich zwischen dem Faktor 1,0 und dem Faktor 1,2 liegen.

Um das Ein- und Auslaufen des stehenden Kettengliedes auf die lastaufnehmende Zahnflanke zu verbessern, geht die lastaufnehmende Zahnflanke in der Nähe des Zahnkopfes vorzugsweise in eine Fasenfläche über. Die Fasenfläche kann eine gekrümmte oder eine ebene Fläche sein. Die Höhe der Fasenfläche, gemessen in radialer Richtung des Zahns, kann vorzugsweise zwischen 0,1 mm und 2 mm liegen, vorzugsweise zwischen 0,2 und 1,5 mm.

Die nachfolgende Figurenbeschreibung beschränkt sich auf die Erläuterung der wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

In der Zeichnung ist ein Ausführungsbeispiel des Gegenstands der Erfindung dargestellt, es zeigen:
- Fig. 1: einen Kettenzug in einer stark schematisierten per- spektivischen Darstellung;
- Fig. 2: ein Kettenglied in einer Draufsicht auf die Ketten- gliedflanke;
- Fig. 3: eine Kettennuss in einer perspektivischen Darstel- lung, gemäß der Erfindung;
- Fig. 4: die Kettennuss geschnitten längs der Symmetrieebene der Kettentaschen und senkrecht zu der Drehachse;
- Fig. 5: das Zusammenspiel zwischen Rundgliederkette und erfindungsgemäßer Kettennuss bei unbelasteter Kette anhand eines Schnitts durch die Kettennuss recht- winklig zu der Drehachse;
- Fig. 6: eine vergrößerte Ausschnittsdarstellung aus Fig.5;
- Fig. 7: eine vergrößerte Ausschnittsdarstellung aus Fig.5, mit einer anderen Gestaltung der Zahnflanke und

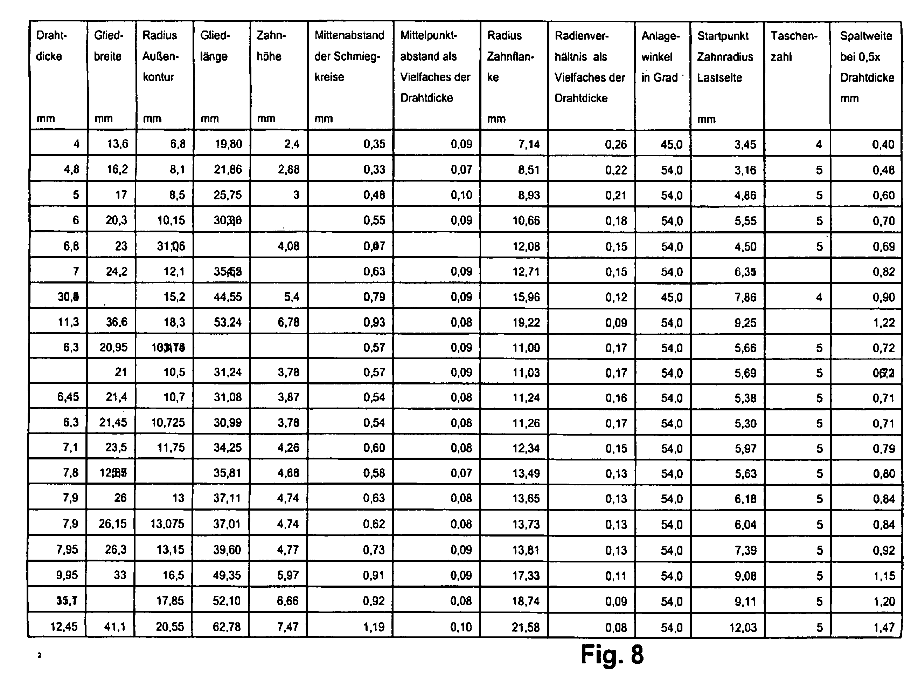

- Fig. 8: eine Tabelle für günstige Werte zur Dimensionierung der Kettennuss in Abhängigkeit von den Kettenpara- metern.

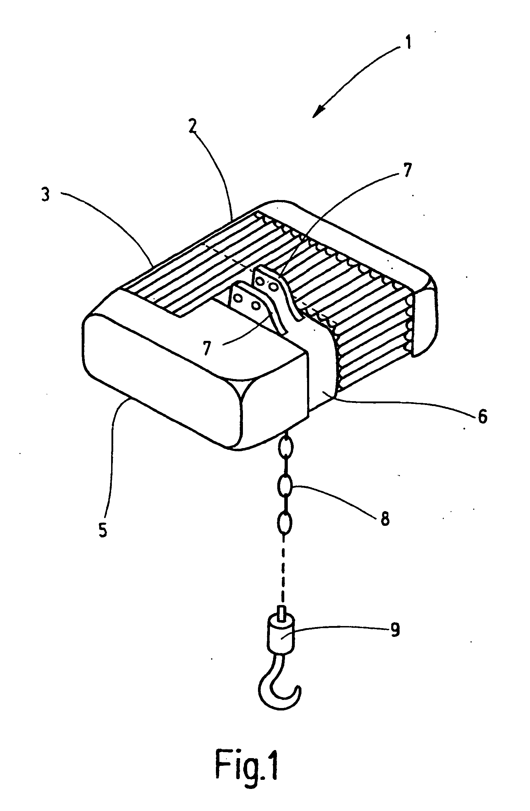

Als Beispiel für die Anwendung der Erfindung zeigt Fig. 1 in einer vereinfachten perspektivischen Darstellung einen Kettenzug 1. Der Kettenzug 1 weist ein etwa quaderförmiges Getriebegehäuse 2 auf, an dessen einer Stirnseite ein Elektromotor 3 in Gestalt eines Asynchronmotors angeflanscht ist. Sowohl das Getriebegehäuse 2 als auch der Motor 3 sind mit durchlaufenden Kühlrippen versehen, wie dies die Figur erkennen lässt. Auf der von dem Getriebegehäuse 2 abliegenden Seite ist an dem Motor 3 ein Deckel 5 vorgesehen, der die Steuerung bzw. wesentliche Teile der Steuerung enthält. Zwischen dem Steuerungsdeckel 5 und der gegenüberliegenden Stirnseite des Getriebegehäuses befindet sich ein Kettennussgehäuse 6, aus dessen Oberseite Laschen 7 vorstehen, die der Aufhängung des Kettenzugs 1 dienen. Unten aus dem Kettennussgehäuse 6 führt eine Rundgliederkette 8 weg, an deren freien Ende ein Haken 9 befestigt ist.

Wie sich aus der Darstellung der Fig. 1 ferner unschwer ergibt, wirkt in der Rundgliederkette 8 stets nur eine vertikal nach unten gerichtete Kraft. Die Kraftrichtung ist unabhängig davon, ob eine an dem Haken 9 hängende Last nach oben gezogen wird oder daran gehindert werden soll, nach unten herunter zu fallen. Auch bei der Abwärtsbewegung wirkt die Kraft in der Rundgliederkette 8 in derselben Richtung und abgesehen von der Anfahrbewegung auch mit derselben Größe wie beim Anheben.

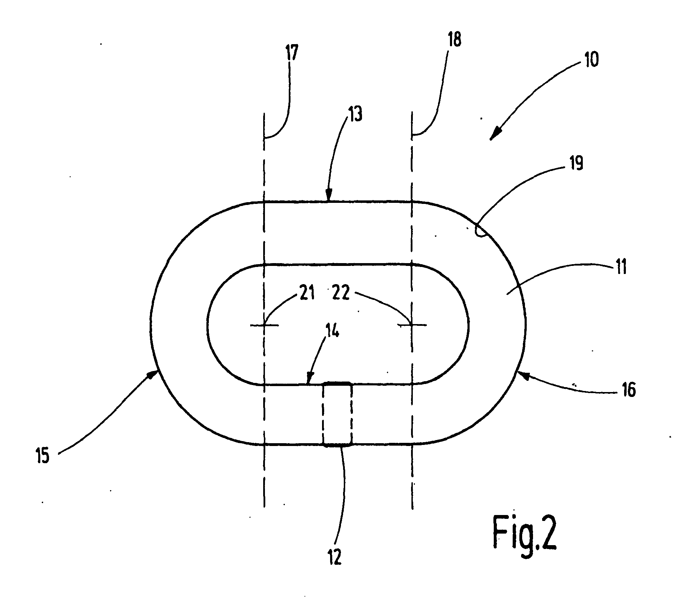

Die Rundgliederkette 8 setzt sich aus einer Vielzahl identischer Kettenglieder 10 zusammen, von denen eines exemplarisch in Fig. 2 in einer Draufsicht auf die Flachseite gezeigt ist. Das Kettenglied 10 besteht aus einem zu einem oval gebogenen Runddraht 11 geeignetem Durchmesser. Der Drahtabschnitt ist an seinen Enden auf Stoß zusammengelegt und bei 12 stumpf verschweißt. Durch die Art der Biegung des Kettengliedes entstehen zwei zueinander parallele Abschnitte 13 und 14, sowie zwei Halbkreisbögen 15 und 16. Die beiden Halbkreisbögen 15 und 16 gehen an den gestrichelten Linien 17 und 18 in die geraden Abschnitte 13 und 14 über. Die Außenkontur des Kettenglieds 10 definiert so eine um das Kettenglied umlaufende Außenlinie 19. Aufgrund dieser Gestalt beschreibt die Außenlinie 19 im Bereich der beiden Halbkreisbögen 15 und 16 einen Halbkreis, dessen Mittelpunkt auf der gestrichelten Linie 17 bzw. 18 liegt und der zwischen den beiden geraden Abschnitten 13 und 14 mittig liegt. Die Mittelpunkte sind in Fig. 2 mit 21 und 22 bezeichnet.

Die benachbarten Kettenglieder würden, wenn sie mit dem gezeigten Kettenglied verkettet sind, auf der Zeichenebene mit ihren Flachseiten senkrecht stehen.

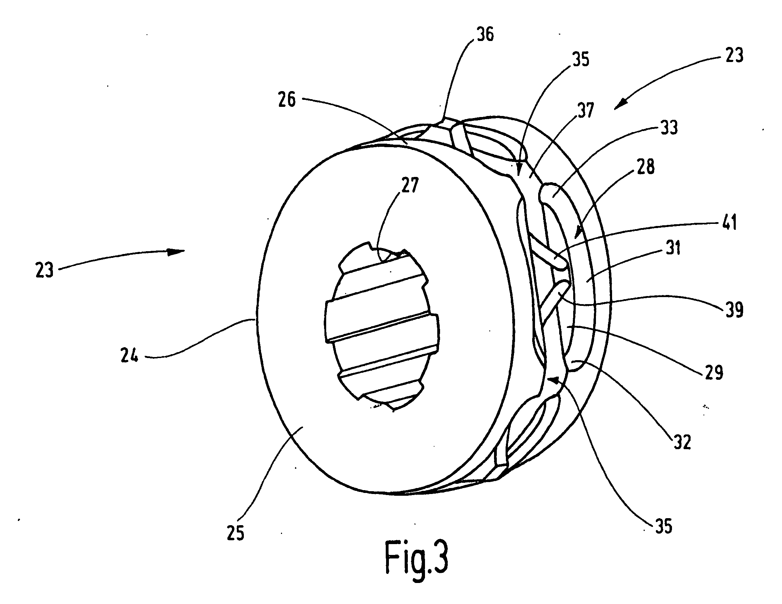

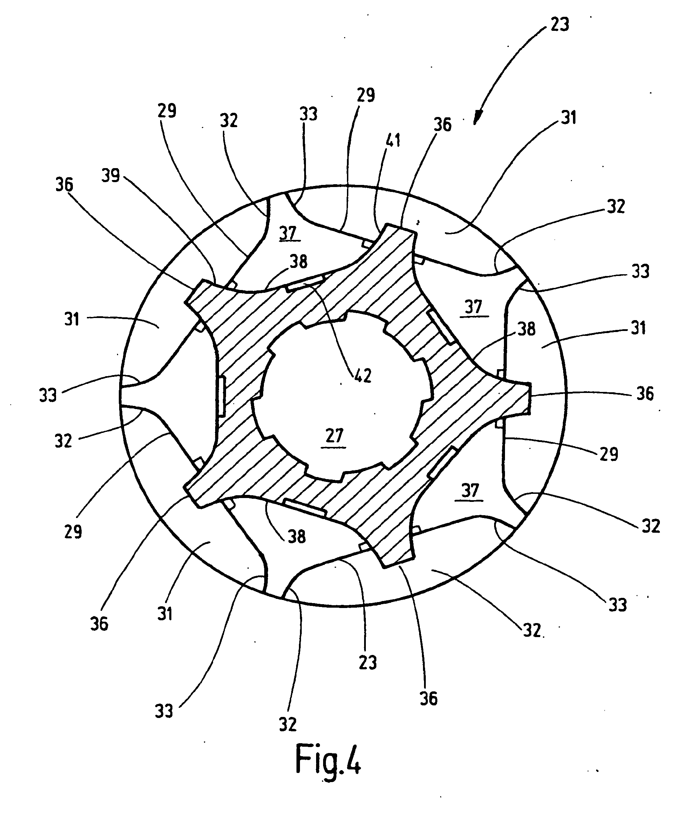

Die Figuren 3 und 4 zeigen eine Kettennuss 23, wie sie in dem Kettennussgehäuse 6 angeordnet ist und drehfest auf der Ausgangswelle des Getriebes 2 sitzt. Mit Hilfe dieser Kettennuss 23, die mit der Rundgliederkette 8 formschlüssig zusammenwirkt, wird die Kraft, die von dem Haken 9 ausgeht, in eine Rotationsbewegung in der Ausgangswelle umgewandelt bzw. umgekehrt.

Die Kettennuss 23 weist einen Grundkörper 24 auf, mit der Gestalt eines kurzen Zylinders, der von zwei zueinander - parallelen Planflächen 25 begrenzt ist, von denen wegen der Darstellung lediglich die eine erkennbar ist. Zwischen den Planflächen 25 erstreckt sich eine zylindrische Umfangsfläche 26. Koaxial zu der Umfangsfläche 26 ist eine profilierte Durchgangsöffnung 27 vorgesehen, die die Kettennuss 23 von der einen Planfläche 25 bis zur anderen durchsetzt. Mit Hilfe der Profilierung in der Öffnung 27 wird eine drehfeste Verbindung mit der jeweiligen Getriebeausgangswelle erreicht.

In der Außenumfangsfläche 26 sind hintereinander bei dem gezeigten Ausführungsbeispiel insgesamt vier Kettentaschen 28 für die liegenden Kettenglieder vorgesehen. Die Kettentaschen 28 sind längs dem Umfang äquidistant koaxial zu der Durchgangsöffnung 27 verteilt. Ihr Abstand voneinander entspricht dem Abstand, den die in den Kettentaschen 28 liegenden Kettenglieder 10 einnehmen würden, wenn die zugehörige Rundgliederkette 8 gestrafft aber ohne Spannung eingelegt wird.

Unter liegenden Kettengliedern versteht der Fachmann ein Kettenglied, das so ausgerichtet ist, dass die Flachseite, die dem Betrachter von Fig. 2 zugekehrt ist, zu der Drehachse, d.h. der Mittelachse der Durchgangsöffnung 27 zeigt.

Die Kettentaschen 28 haben untereinander identische Gestalt. Sie sind wannenförmig und werden von einem Taschenboden 29 sowie einer Wand 31 begrenzt. Die Wand 31 endet auf der Höhe der Außenumfangsfläche 26.

Der Verlauf der Wand 31 entspricht dem Verlauf der Außenlinie 19 des darin befindlichen Kettenglieds 10. Quer zur Umfangsrichtung liegend bildet die Wand 31 Anlage- oder Stirnflächen 32 und 33, an denen sich bei Belastung das betreffende Kettenglied 10 mit der Außenseite des Kreisbogens 15 bzw. 16 anlegen kann. Über die Stirnflächen 32 oder 33, je nach konstruktiver Wirkrichtung, erfolgt das formschlüssige Zusammenwirken zwischen der Kettennuss 23 und den liegenden Kettengliedern 10, die sich in den Taschen 28 befinden.

Der Taschenboden 29 ist eben, entsprechend der ebenen Flachseite der liegenden Kettenglieder 10.

Wegen der gekreuzten Anordnung der Kettenglieder einer Rundgliederkette müssen zwangsläufig die zwei liegenden Kettenglieder, miteinander verbindende Kettenglieder, stehend angeordnet sein, d.h. ihre Flankenfläche, die parallel zu der Zeichenebene von Fig. 2 ist, steht auf der 8Drehachse der Kettennuss 23 senkrecht. Um die stehenden Kettenglieder 10 unterzubringen, enthält die Kettennuss 23 weitere Kettentaschen 35, die zahlenmäßig mit den Kettentaschen 28 für die liegenden Kettenglieder übereinstimmen. Die Kettentaschen 35 sind, wie die Figur erkennen lässt, so angeordnet, dass sie in Umfangsrichtung sich mit den Kettentaschen 28 überdecken. Gedanklich lassen sich die Kettentaschen 35 zusammensetzen aus einer in Umfangsrichtung verlaufenden Nut mit der Breite entsprechend der Dicke des Kettenglieds 10, wobei in entsprechenden Abständen aus der Nut Zähne 36 radial vorstehen. Somit haben die Taschen 35 ebenfalls eine etwa wannenförmige Gestalt und werden von zwei zueinander parallelen ebenen Seitenflächen 37 begrenzt, von denen in der Darstellung von Fig. 3 bzw. 4 lediglich eine erkennbar ist. Der Abstand der Seitenflächen 37 voneinander ist etwas größer als die Dicke des Kettenglieds 10.

Die Zähne 36 können in dem Bereich, der über die Flächen 38 radial vorsteht eine Breite haben, die nur geringfügig kleiner ist als der lichte Abstand der geraden Abschnitte 13 und 14 des Kettenglieds 10 voneinander.

Die Kettentaschen 35 werden ferner von einem Taschenboden 38 und zwei Zahnflankenflächen 39 und 41 begrenzt.

Da erfindungsgemäß auch die stehenden Kettenglieder mit zur Kraftübertragung zwischen der Kettennuss 23 und der Rundgliederkette 8 eingesetzt werden sollen und die Kraftwirkung hierbei stets dieselbe Richtung hat, wird lediglich stets eine Zahnflanke Last aufnehmend oder Last übertragend sein. Für die weitere Erläuterung der Erfindung sei angenommen, dass dies die Zahnflanke 39 ist, die somit im Folgenden als lastaufnehmende Zahnflanke bezeichnet wird.

Lediglich der Vollständigkeit halber sei noch erwähnt, dass in dem Taschenboden 28 Vertiefungen 42 enthalten sein können, die die Schweißnaht 12 aufnehmen. Somit setzt sich die Begrenzung jeder Kettentasche 35 aus dem, mit Ausnahme der Ausnehmung 42, ebenen Taschenboden 38 zusammen, der an beiden Enden in die Zahnflanken 39 und 41 glatt übergeht. Beidseits der Ausnehmung 42 bildet der Taschenboden 38 gerade Abschnitte, d.h. Abschnitte, die auf einer Tangente liegen. Gerade bedeutet in diesem Falle nicht notwendigerweise auch eben. Der Taschenboden 38 kann genauso wie die Zahnflanken 39 und 41 eine Krümmung bezüglich einer Achse aufweisen, die in der Zeichenebene von Fig. 4 liegt. Mit anderen Worten, der Taschenboden 38 kann auch eine Hohlkehle darstellen, deren Krümmungsradius geringfügig größer ist als der Krümmungsradius des Drahtes, aus dem das Kettenglied 10 hergestellt ist.

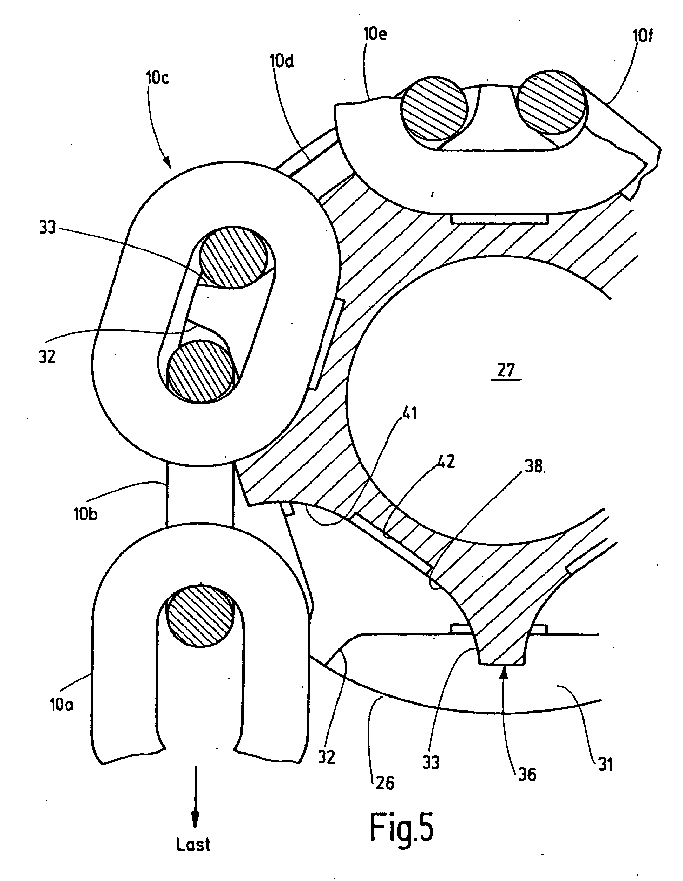

Das Zusammenwirken der Rundgliederkette 8 mit der Kettennuss 23 ergibt sich aus Fig. 5.

Die auf der Drehachse der Kettennuss 23 senkrecht stehende Symmetrieebene der Kettentaschen 28 ist gleichzeitig die Symmetrieebene der Kettentaschen 35 und auch die Symmetrieebene der Kettenglieder 10, wenn diese in den Kettentaschen 28 bzw. 35 liegen.

Fig. 5 zeigt die Kettennuss 23 geschnitten längs dieser Symmetrieebene, wie dies in Fig. 4 veranschaulicht ist. Die liegenden Kettenglieder 10 sind ebenfalls in dieser Symmetrieebene geschnitten, d.h. in einer Ebene, die auf der Zeichenebene von Fig. 2 senkrecht steht und durch die Mittelpunkte 21 und 22 führt.

In Fig. 5 sind die Kettenglieder mit dem Bezugszeichen 10 und zusätzlich mit einem Kleinbuchstaben bezeichnet, um sie voneinander besser unterscheiden zu können. Für alle gilt die Beschreibung im Zusammenhang mit Fig. 2.

Wie Fig. 5 erkennen lässt, läuft die Rundgliederkette nach links tangential von der Kettennuss 23 ab. Das Kettenglied 10a ist bereits praktisch vollständig von der Kettennuss 23 abgelaufen und zeigt nach unten in Lastrichtung. Das liegende Kettenglied 10b ist über die Verkettung mit dem Kettenglied 10c mit dem Kettenglied 10d verbunden. Das Kettenglied 10d stützt sich zufolge der Wirkung der Last an der Stirnwand 33 der Kettentasche 28 ab. Das nächste stehende Kettenglied 10e liegt weitgehend kraftfrei in der nächsten Kettentasche 35 entgegen dem Uhrzeigersinn.

Dieses Bild setzt sich fort, bis im Bereich des Leertrums der Rundgliederkette 8 diese von der Kettennuss 23 abhebt, um in einen nicht gezeigten Speicher einzulaufen.

Für das Verständnis der Erfindung ist im Wesentlichen die Situation von Bedeutung, wo die Rundgliederkette 8 auf der Seite des Lasttrums aus der Kettennuss 23 ausläuft und zwar speziell dort, wo das oberste liegende Kettenglied 10b von dem darüber befindlichen stehenden Kettenglied 10c gehalten wird, ohne dass sich das Kettenglied 10b weiter noch an anderen Teilen der Kettennuss abstützen kann.

Wie die Figur erkennen lässt, geschieht die Kraftübertragung in der gezeigten Winkelstellung der Kettennuss 23 im Wesentlichen durch das formschlüssige Zusammenwirken der Stirnwand 33 der Kettentasche 28 mit dem benachbarten Bug, d.h. dem benachbarten Halbkreisbogen des Kettenglieds 10c. Das Kettenglied 10d legt sich beidseits der Kettentasche 35, die die Stirnwand 33 durchschneidet an die Stirnwand 33 an.

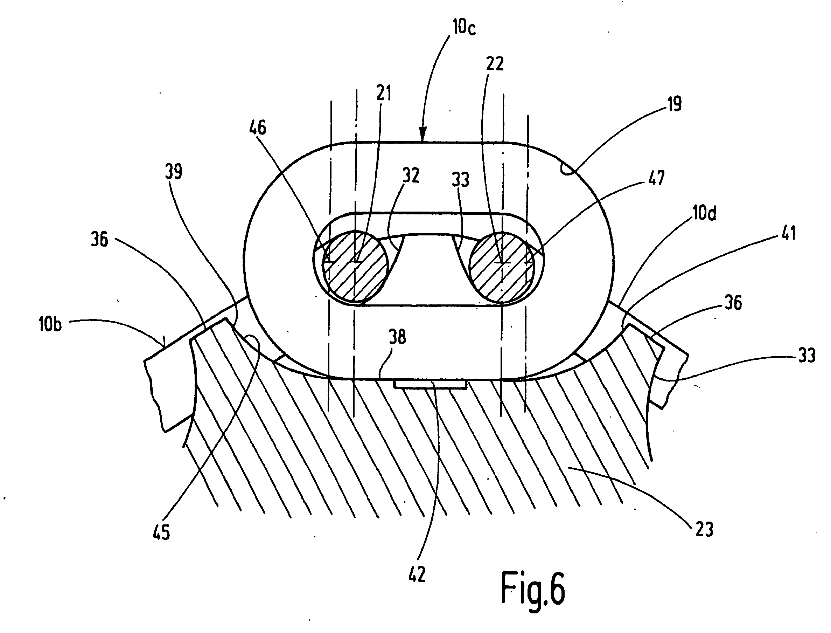

Fig. 6 zeigt in einer vergrößerten Ausschnittsdarstellung die Eingriffszusammenhänge zwischen dem Bug eines stehenden Kettengliedes, beispielsweise des Kettengliedes 10c, und der lastaufnehmenden Zahnflanke 39 des benachbarten Zahns 36. Aus der Darstellung von Fig. 6 sind sämtliche Details, die nicht zur Erläuterung der Eingriffsverhältnisse von Bedeutung sind, weggelassen. Außerdem sind die Größenverhältnisse sehr stark übertrieben, um das Wesentliche erkennen zu können. Der Schnitt durch die Kettennuss 23 liegt in der Symmetrieebene, die auf der Drehachse der Kettennuss senkrecht steht. Es ist die zuvor erwähnte Symmetrieebene, die mittig zwischen den beiden Seitenflächen 37 der Kettentasche 35 verläuft. Sie verläuft somit auch, abgesehen vom Kippspiel mittig zwischen den beiden zueinander parallelen Flankenflächen des Kettengliedes 10c. Diese Flächen werden durch die Tangentialebene definiert, die das Kettenglied 10c an beiden Seiten parallel zu der Zeichenebene nach Fig. 2 bzw. 6 verlaufen. In dieser erkennbaren Schnittebene bildet die lastaufnehmende Flankenfläche 39 eine Zahnflankenkrümmungslinie 45, die der Außenlinie oder Außenkonturlinie 19 unmittelbar in Umfangsrichtung gegenübersteht (abgesehen wiederum vom Kippspiel).

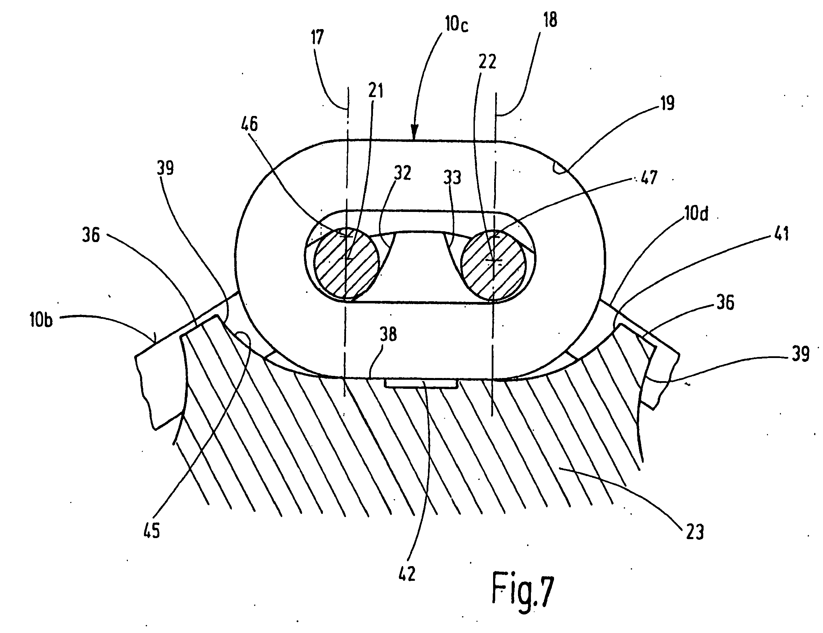

Die Zahnflankenkrümmungslinie 45 ist ein Kreisbogen, der bis zu der Spitze des benachbarten Zahns 36 reicht und tangential in den Taschenboden 38 einmündet. Der Mittelpunkt dieses die Zahnflankenkrümmungslinie 45 definierenden Kreises liegt bei 46, d.h. der Mittelpunkt 46 ist gegenüber dem Mittelpunkt 21 in Lastrichtung ein Stück weit parallel zu dem Taschenboden 38 verschoben. Das Maß der Verschiebung, d.h. der Abstand zwischen den beiden Mittelpunkten 21 und 46 ist abhängig von der Dimensionierung des Kettengliedes 10. In der nachfolgenden Tabelle in Fig. 7 sind günstige Werte für den Abstand a der Mittelpunkte in Abhängigkeit von der Dimensionierung des Kettenglieds 10 angegeben.

Der Durchmesser des Kreises, der die Zahnflankenkrümmungslinie beschreibt hat denselben Durchmesser wie der Halbkreisbogen 16, 17.

Bei der Bemessung dieses Abstands a wurde davon ausgegangen, dass es sich um eine jungfräuliche Rundgliederkette handelt, die keine Verschleißerscheinungen zeigt. Sie liegt zwanglos über der Kettennuss 23, d.h. die liegenden Kettenglieder 10b und 10d liegen symmetriert in ihren Kettentaschen 28. Das stehende Kettenglied 10c ist zwischen diesen wiederum symmetrisch eingelegt, so dass auf diese Weise die Lage des Mittelpunkt 21 als Krümmungsmittelpunkt der Außenkonturlinie 19 erhalten wird.

Wie sich aus der Tabelle ergibt, ist der Keil, der sich aufgrund der Mittelpunktsverschiebung der beiden Kreise ergibt sehr klein. Er ist letztendlich so bemessen, dass bei einer Belastung der Kette mit Nennlast in der Situation, wie sie in Fig. 5 gezeigt ist, durch das flachliegende Kettenglied 10b, das unmittelbar ablaufende stehende Kettenglied 10c unter gleichzeitiger elastischer Verformung in die Länge gezogen wird. Zufolge dieser Verformung wird sich das stehende Kettenglied 10c mit seinem Bug, also dem Teil des Halbkreisbogens, der in Lastrichtung zeigt, an der Zahnflanke 39 anliegen. D.h. ab diesem Belastungswert wird die Kraftübertragung zwischen der Kettennuss 23 unter der Rundgliederkette 8 zusätzlich auch über die stehenden Kettenglieder übertragen. Die Kraftübertragung erfolgt nun nicht mehr ausschließlich, wie beim Stand der Technik, über die liegenden Kettenglieder und die Stirnanlagefläche 33.

Es hat sich herausgestellt, dass sich durch diese Konfiguration bei gleicher Kettenqualität die Kette bis zu höheren Lastwerten ausnutzen lässt. Die gefahrlose Laststeigerung ist bis zu 25 % gegenüber der sonstigen Nennlast möglich.

Es hat sich ferner herausgestellt, dass diese neue Kettennuss eine erhöhte Sicherheit bringt und die Kette weniger verschleißt.

Bei der vorausgehenden Beschreibung wurde davon ausgegangen, dass die Kette 8 eine Rundgliederkette ist, bei der die einzelnen Kettenglieder, wie mehrfach erläutert, aus einem Stück Runddraht gefertigt sind. Dementsprechend ist es von Vorteil, wenn die lastaufnehmende Zahnflanke 39 biaxial gekrümmt ist. Dies bedeutet, dass sie einerseits entsprechend dem Schmiegkreis gekrümmt ist und andererseits die Erzeugende für die lastaufnehmende Zahnflankenfläche 39 ein Kreisbogen ist, mit einem Durchmesser etwas größer als der Drahtdurchmesser, aus dem die Rundgliederkette hergestellt ist. Das Maß der Flächenpressung wird dadurch reduziert.

Sinngemäß das gleiche kann im Bereich des Taschenbodens vorgenommen werden.

Im Interesse einer Vergrößerung der Traglast der Gliederkette laufen Bestrebungen, anstelle von Runddraht zur Herstellung der Kettenglieder einen Profildraht zu verwenden. Der Profildraht setzt sich aus einem Kreisbogenabschnitt und einem Ausschnitt eines Quadrates zusammen. Oder anders ausgedrückt, es handelt sich um einen quadratischen Querschnitt, bei dem auf der einen Seite, die einander benachbarten Ecken durch Viertelkreise ersetzt sind.

Auch bei dieser Art von Ketten kann die erfindungsgemäße Gestaltung der lastaufnehmende Zahnflanke 39 verwendet werden. Die lastaufnehmende Fläche 39 ist dann nicht mehr biaxial gekrümmt, wie dies oben im Zusammenhang mit der Rundgliederkette erwähnt ist, sondern die Erzeugende für die Fläche ist eine Gerade, die längs der Zahnflankenkrümmungslinie parallel zu der Drehachse geführt ist.

Schließlich ist es denkbar, als Kettennuss unbehandelten Stahl ausreichender Festigkeit zu verwenden, der nachträglich nicht wärmebehandelt ist. Hierzu werden die Kosten deutlich gesenkt.

Die gezeigte Kettennuss ist mit Bohrungen versehen, um auf eine Welle aufgesteckt zu werden. Es ist auch denkbar, die Kettennuss mit einer einstückig ausgehenden Welle auszubilden.

Bei der obigen Beschreibung wurde davon ausgegangen, dass nur die in einer Drehrichtung liegenden Zahnflankenflächen als lastaufnehmende Flankenflächen angesehen werden und gemäß der oben gegebenen Lehre profiliert und dimensioniert sind. Das Profil der gegenüberliegenden und bei der betreffenden Drehrichtung nicht lastaufnehmende Zahnflankenfläche ist weitgehend gleichgültig. Sie wird im Hinblick auf einen möglichst bruchfesten Zahnfuß bemessen.

Wenn die Zahnfußfestigkeit ausreicht, ist es auch möglich, die neue Kettennuss bidirektional zu gestalten, d.h. die oben erläuterte Geometrie und Dimensionierung nicht nur an der Zahnflankenfläche 39, sondern auch an der Zahnflankenfläche 41 vorzunehmen, und somit einen Schmiegkreis zu verwenden, dessen Mittelpunkt 47 gegenüber dem Mittelpunkt 22 in der anderen Drehrichtung verschoben ist, wenn die Last nicht nach links, sondern nach rechts in Bezug auf Fig. 6 wirkt.

Je nach Situation kann es vorteilhaft sein, wenn der Radius der Zahnflankenkrümmungslinie 45 größer ist als der Radius der Außenkonturlinie 19. Der Mittelpunkt 46 bzw 47 ist in diesem Falle bezogen auf die Darstellung zusätzlich nach oben verschoben. Das Maß der Verschiebung sorgt dafür, dass weiterhin die Zahnflankenkrümmungslinie 45 tangential in den Taschenboden 38 einmündet.

Fig. 7 zeigt ein weiteres Ausführungsbeispiel der Erfindung. Der erforderliche Abstand zwischen der Außenkonturlinie 19 des Kettenglieds 10c und der benachbarten Zahnflanke 39 bzw. 41 wird hier nicht, wie bei dem obigen Ausführungsbeispiel gemäß Fig. 6, durch eine Verschiebung der Schmiegkreise erreicht. Der Abstand wird hier vielmehr erzeugt, indem die Zahnflankenkrümmungslinie 45 einen Schmiegkreis definiert, dessen Radius, beispielsweise gemäß Tabelle 8, gegenüber dem Radius der Außenkonturlinie 19 im Bereich der Halbkreisbögen 16, 17 vergrößert ist.

Da im Bereich der Kettentasche 35 Knickstellen vermieden werden müssen, die sonst zu Einprägungen an der Außenseite des Kettengliedes 10 führen könnten, ist der Mittelpunkt 46 auf der Trenngeraden 17 bzw. 18 von den Taschenboden 38 weg verschoben. Dadurch mündet der Taschenboden 38 mit seinem geraden Abschnitt unmittelbar tangential, und damit knickfrei, in die Zahnflankenkrümmungslinie 45 ein. Die Mittelpunkte 21 und 46 liegen somit auf der Trenngeraden 17, die den Halbkreisbogen 15 von den geraden Abschnitten 12, 13 trennt, während der Krümmungsmittelpunkt 47 auf der Trenngeraden 18 liegt, die die geraden Abschnittes 13, 14 von dem Halbkreisbogen 16 trennt. Der Abstand zwischen den Mittelpunkten 21, 46 bzw. 22, 47 voneinander entspricht der Radiusdifferenz.

Im übrigen ist die Wirkung wie oben ausführlich beschrieben.

Schließlich ist es noch denkbar, die Zahnflankenkrümmungslinie nicht als Kreisbogenausschnitt zu bemessen, sondern ihr eine Gestalt zu geben, die die Außenkonturlinie 19 in diesem Bereich unter Last annimmt. Auch in diesem Falle lassen sich sowohl für die Zahnflankenkrümmungslinie als auch für die Außenkonturlinie Schmiegkreise definieren, die gemäß Fig. 6 und der obigen Tabelle gegeneinander verschoben sind. Diese Schmiegkreise stellen Näherungskurven dar, die beispielsweise durch eine Art Regressionsanalyse nach dem Gesichtspunkt der kleinsten Fehlerquadrate ermittelt werden. Die Abstandsmessung und die Anpassung an den Schmiegkreis erfolgt dabei ausgehend von dem Radien des jeweils gedachten Kreises. Die Tabelle ist für eine Nennspannung von 160 N/mm² berechnet und getestet.

Die Höhe jedes Zahns 36 bewegt sich im Spannungsfeld zwischen guten Laufeigenschaften der Kette 8 und Maximierung des Drehwegs, längs dem die Kraft zwischen Kettennuss und stehendem Kettenglied übertragen wird. Günstige Werte für die Höhe des Zahns 36 liegen zwischen dem 0,16-fachen und dem 0,75-fachen der Dicke des Drahts aus dem das Kettenglied 10 hergestellt ist. Die Höhe ist gemessen als Abstand zwischen einer Ebene und der Zahnspitze. Die Bezugsebene ist die Tangentialebene an der unteren Flankenfläche des liegenden Kettenglieds, durch das der Zahn 36 hindurchragt.

Die Ein- und Ablaufverhältnisse lassen sich verbessern, wenn der Zahn 36 an seiner Zahnspitze mit einer Fase versehen ist. Die Höhe oder Breite der Fase liegt zwischen 0,1 und 1,5 mm.

Eine Kettennuss für Gliederketten, beispielsweise Rundgliederketten oder Profilstahlketten, weist am Umfang Kettentaschen für liegende Kettenglieder auf. Es sind ferner Kettentaschen für stehende Kettenglieder vorgesehen. Die Kettentaschen für die stehenden Kettenglieder sind durch Zähne voneinander getrennt. Die Zahnflankenfläche desjenigen Zahns, gegen die sich ein stehendes Kettenglied unter der Wirkung einer Last anlegt, ist in spezieller Weise dimensioniert und profiliert. Die Dimensionierung geschieht so, dass bis zu einer bestimmten Kettenbelastung das stehende Kettenglied mit seinem Bug nicht an der Zahnflanke anliegt. Ein Kontakt zwischen der Zahnflankenfläche und dem Bug des betreffenden stehenden Kettenglieds findet erst ab einer bestimmten Kettenbelastung statt.

## Patentansprüche

1. Kettennuss (23) zum Antreiben von Gliederketten (8), wie Rundgliederketten oder Profilstahlketten, insbesondere von Kettenzügen (1), wobei jedes Kettenglied (10) aus einem gebogenen Draht besteht und eine ebene Gestalt aufweist, die sich aus zwei zueinander parallelen Abschnitten (13,14) und zwei Halbkreisbögen (15,16) zusammensetzt,
mit einem Grundköper (24), der eine Außenumfangsfläche (26) und eine Drehachse aufweist,
mit Kettentaschen (28), die sich an der Außenumfangsfläche (26) befinden und die dazu eingerichtet sind die liegenden Kettenglieder (10) aufzunehmen und Kraft von der Kettennuss (23) auf die liegenden Kettenglieder (10) zu übertragen,
mit Kettentaschen (35),
- die sich an der Außenumfangflächen (26) befinden,
- die dazu eingerichtet sind die stehenden Kettenglieder (10) aufzunehmen,
- deren Anzahl der Anzahl der Kettentaschen (28) für die liegenden Kettenglieder entspricht,
- von denen jede für die stehenden Kettenglieder Auflagebereiche (38) aufweist, auf denen sich das jeweilige Kettenglied (10) zumindest mit einem an den Kreisbogen (15,16) anschließenden Teil seines geraden Abschnitts aufliegt, und
- von denen je eine zwischen benachbarten Kettentaschen (28) für die liegenden Kettenglieder (10) diese Kettentaschen (28) überschneidend angeordnet ist und
mit Zähnen (36),
- von denen je einer zwischen zwei benachbarten Kettentaschen (35) für die stehenden Kettenglieder (10) angeordnet ist,
- die dazu eingerichtet sind Kraft von der Kettennuss (23) auf die stehenden Kettenglieder (10) zu übertragen und
- von denen jeder von zwei Zahnflanken (39,41) begrenzt ist, die in Umfangsrichtung zeigen,
wobei wenigstens eine der beiden Zahnflanken (39) jedes Zahns (36) als lastaufnehmende Zahnflanke (39) entgegen der Lastrichtung in der Gliederkette (8) zeigt, wenn die Kettennuss (23) betriebsmäßig eingesetzt ist,
wobei jede lastaufnehmende Zahnflanke (39) in der auf der
Drehachse senkrecht stehende Symmetrieebene der Kettentaschen (35) für die stehenden Kettenglieder (10) eine Zahnflankenkrümmungslinie (45) definiert, die zumindest angenähert dem gekrümmten Verlauf entspricht, den die Außenlinie (45) des benachbarten und in Lastrichtung zeigenden Halbkreisbogens (15) eines stehenden Kettenglieds (10) aufweist, das sich in der zugehörigen Kettentasche (35) befindet, und
wobei die Lage der lastaufnehmenden Zahnflanke (39) derart bemessen ist, dass deren Zahnflankenkrümmungslinie (45) gemessen in der Symmetrieebene zumindest in der Nähe der Zahnspitze einen Abstand von der in Lastrichtung zeigenden Außenlinie (19) des Halbkreisbogens (15,16) eines in der zugehörigen Kettentasche (35) befindlichen stehenden Kettenglieds (10) aufweist, wenn die beiden benachbart liegenden Kettenglieder (10) zentriert und ohne Einwirken einer äußeren Kraft in ihren zugehörigen Kettentaschen (28) liegen und zwischen den Kettengliedern (10) kein Spiel besteht.

2. Kettennuss nach Anspruch 1, **dadurch gekennzeichnet, dass** der Zahn (36) über einer Fläche, die durch die der Drehachse benachbarte Flankenfläche des liegenden Kettenglieds (10) definiert ist, eine Höhe aufweist, die zwischen dem 0,16-fachen und dem 0,75-fachen der Dicke des Kettenglieds liegt.

3. Kettennuss nach Anspruch 1, **dadurch gekennzeichnet, dass** die lastaufnehmende Zahnflanke (39) biaxial gekrümmt ist.

4. Kettennuss nach Anspruch 3, **dadurch gekennzeichnet, dass** die andere Krümmung einen Radius aufweist, der nicht kleiner ist als der halbe Durchmesser des Drahts ist, aus dem das Kettenglied (10) hergestellt ist.

5. Kettennuss nach Anspruch 1, **dadurch gekennzeichnet, dass** die Außenlinie (19) des Halbkreisbogens (15,16) eines in die Kettennuss (23) eingelegten stehenden Kettenglieds (10) zumindest angenähert einen Kettengliedschmiegkreis mit einem Mittelpunkt (21,22) definiert, dass die Zahnflankenkrümmungslinie (45) der lastaufnehmende Zahnflanke (39) einen Zahnflankenschmiegkreis mit einem Mittelpunkt (46,47) definiert, und dass der Mittelpunkt (46,47) des Zahnflankenschmiegkreises gegenüber dem Mittelpunkt (21,22) des Kettengliedschmiegkreis verschoben ist.

6. Kettennuss nach Anspruch 5, **dadurch gekennzeichnet, dass** die Verschiebung in Lastrichtung zeigt.

7. Kettennuss nach Anspruch 5, **dadurch gekennzeichnet, dass** die Verbindungsgerade zwischen den beiden Mittelpunkten (21,46;22,47) parallel zu den geraden Abschnitten (13,14) des stehenden Kettenglieds (10) verläuft.

8. Kettennuss nach Anspruch 5, **durch gekennzeichnet, dass** die Verbindungsgerade zwischen den beiden Mittelpunkten (21,46;22,47) unter einem spitzen Winkel zu den Längsachsen der geraden Abschnitte (13,14) des stehenden Kettenglieds (10) verläuft.

9. Kettennuss nach Anspruch 5, **durch gekennzeichnet, dass** die Verbindungsgerade zwischen den beiden Mittelpunkten (21,46;22,47) unter einem rechten Winkel zu den Längsachsen der geraden Abschnitte (13,14) des stehenden Kettenglieds (10) verläuft.

10. Kettennuss nach Anspruch 5, **dadurch gekennzeichnet, dass** der Abstand zwischen den Mittelpunkten (21,46;22,47) der Schmiegkreise zwischen dem 0,06-fachen und dem 0,1-fachen vorzugsweise zwischen dem 0,082-fachen und dem 0,096-fachen des Drahtdurchmessers des Kettenglieds (10) liegt.

11. Kettennuss nach Anspruch 1, **dadurch gekennzeichnet, dass** die Zahnflankenkrümmungslinie (45) exakt kreisförmig ist.

12. Kettennuss nach Anspruch 1, **dadurch gekennzeichnet, dass** die Zahnflankenkrümmungslinie (45) denselben Verlauf aufweist, wie die Außenlinie (19) des der lastaufnehmenden Zahnflanke (39) benachbarten Halbkreisbogens (15) eines mit der Nennlast belasteten Kettenglieds (10).

13. Kettennuss nach Anspruch 1, **dadurch gekennzeichnet, dass** sie aus gehärtetem, vorzugsweise einsatzgehärtetem, oder unbehandelten Stahl besteht.

14. Kettennuss nach Anspruch 1, **dadurch gekennzeichnet, dass** sie eine Wellenbohrung (27) enthält, mit der sie auf eine Ausgangswelle eines Getriebemotors (2,3) drehfest aufsteckbar ist.

15. Kettennuss nach Anspruch 1, **dadurch gekennzeichnet, dass** die Kettentaschen (28) für die liegenden Kettenglieder (10) wannenförmig gestaltet sind.

16. Kettennuss nach Anspruch 1, **dadurch gekennzeichnet, dass** die Kettentaschen (35) für die stehenden Kettenglieder (10) von der lastaufnehmenden Zahnflanke (39), einer der lastaufnehmenden Zahnflanke (39) gegenüberliegenden Zahnflanke (41) eines benachbarten Zahns (36) und einem Taschenboden (38) definiert ist.

17. Kettennuss nach Anspruch 16, **dadurch gekennzeichnet, dass** der Taschenboden (38) gekrümmt ist, wobei dessen Krümmungsachse rechtwinkelig zu der Drehachse liegt.

18. Kettennuss nach Anspruch 16, **dadurch gekennzeichnet, dass** der Taschenboden (38) eben ist.

19. Kettennuss nach Anspruch 16, **dadurch gekennzeichnet, dass** der Taschenboden (38) mittig eine Vertiefung (42) zur Freistellung einer Schweißnaht (12) des Kettenglieds (10) aufweist.

20. Kettennuss nach Anspruch 1, **dadurch gekennzeichnet, dass** der Radius des Schmiegkreises der Zahnflankenkrümmungslinie (45) größer ist als der Radius des Schmiegkreises der Außenlinie (19) des Halbkreisbogens (15,16).

21. Kettennuss nach Anspruch 20, **dadurch gekennzeichnet, dass** das Verhältnis der Radien zwischen dem 0,08-fachen und dem 0,3-fachen des Drahtdurchmessers liegt.

22. Kettennuss nach Anspruch 20, **dadurch gekennzeichnet, dass** das Verhältnis der Radien zwischen dem Faktor 1,0 und dem Faktor 1,2 liegt.

23. Kettennuss nach Anspruch 1, **dadurch gekennzeichnet, dass** die lastaufnehmende Zahnflanke (39) in Richtung auf die Zahnspitze in eine Fasenfläche übergeht.

24. Kettennuss nach Anspruch 23, **dadurch gekennzeichnet, dass** die Höhe der Fasenfläche abhängig vom Drahtdurchmesser des Kettenglieds (10) zwischen 0,1 mm und 1,5 mm liegt.

25. Kettennuss nach Anspruch 1, **dadurch gekennzeichnet, dass** die Kettennuss (23) einen einstückigen Wellenzapfen aufweist.

26. Kettennuss nach Anspruch 1, **dadurch gekennzeichnet, dass** die Zähne (36) in dem Bereich, der über den Taschenboden (38) für ein liegendes Kettenglieds (10) radial vorsteht eine Breite haben, die nur geringfügig kleiner ist als der lichte Abstand der geraden Abschnitte (13,14) des Kettenglieds (10) voneinander.

27. Kettennuss nach Anspruch 1, **dadurch gekennzeichnet, dass** bei einer vorgegebenen Spannungsbelastung größer 0 N/mm², vorzugsweise zwischen 100% und 75% der Nennspannung der Gliederkette (8) der Abstand zwischen der Zahnflankenkrümmungslinie (45) und der Außenlinie (19) des Halbkreisbogens (15,16) verschwindet.

28. Kettennuss nach Anspruch 27, **dadurch gekennzeichnet, dass** die Nennspannung zwischen 320 N/mm² und 80 N/mm², vorzugsweise 200 N/mm² und 100 N/mm² beträgt.

29. Kettennuss nach Anspruch 27, **dadurch gekennzeichnet, dass** die Nennspannung aus der nominellen Tragfähigkeit des Kettentriebs ohne Berücksichtigung eines dynamischen Anteils und des Drahtquerschnitts des Kettenglieds errechnet wird.

## Claims

1. Chain sprocket (23) for driving link chains (8), such as round link chains or sectional steel chains, in particular of chain hoists (1), wherein each chain link (10) consists of a bent wire and has a plane structure, which comprises two parallel sections (13, 14) and two semicircular curves (15, 16),
with a base body (24), which has an outer peripheral surface (26) and a rotational axis,
with chain recesses (28), which are located on the outer peripheral surface (26) and are arranged to receive the horizontal chain links (10) and transfer power from the chain sprocket (23) to the horizontal chain links (10),
with chain recesses (35),
• which are located on the outer peripheral surface (26),
• which are arranged to receive the vertical chain links (10),
• the number of which corresponds to the number of chain recesses (28) for the horizontal chain links,
• each of which has supporting regions (38) for the vertical chain links, on which the respective chain link (10) lies at least with a part of its straight section adjoining the semicircular curve (15, 16), and
• one of which is respectively arranged between adjacent chain recesses (28) for the horizontal chain links (10) to overlap these chain recesses (28), and
with teeth (36),
• one of which is respectively arranged between two adjacent chain recesses (35) for the vertical chain links (10),
• which are arranged to transfer power from the chain sprocket (23) to the vertical chain links (10), and
• each of which is delimited by two tooth flanks (39, 41) that point in the peripheral direction,
wherein at least one of the two tooth flanks (39) of each tooth (36) as load-carrying tooth flank (39) points towards the load direction in the link chain (8) when the chain sprocket (23) is used operationally,
wherein in the planes of symmetry standing perpendicularly on the rotational axis of the chain recesses (35) for the vertical chain links (10) each load-carrying tooth flank (39) defines a tooth flank line of curvature (45), which corresponds at least approximately to the curved course that the outline (45) of the adjacent semicircular curve (15) pointing in the load direction of a vertical chain link (10) located in the associated chain recess (35) has, and
wherein the position of the load-carrying tooth flank (39) is dimensioned such that its tooth flank line of curvature (45), measured in the plane of symmetry, at least in the vicinity of the tooth point is spaced from the outline (45) of the semicircular curve (15, 16) pointing in the load direction of a vertical chain link (10) located in the associated chain recess (35), when the two adjacent chain links (10) lie centred in their associated chain recesses (28) without action of an external power and there is no play between the chain links (10).

2. Chain sprocket according to claim 1, **characterised in that** the tooth (36) above a surface defined by the flank surface adjacent to the rotational axis of the horizontal chain link (10) has a height, which lies between 0.16-times and 0.75-times the thickness of the chain link.

3. Chain sprocket according to claim 1, **characterised in that** the load-carrying tooth flank (39) is curved biaxially.

4. Chain sprocket according to claim 3, **characterised in that** the other curvature has a radius, which is not smaller than half the diameter of the wire, from which the chain link (10) is produced.

5. Chain sprocket according to claim 1, **characterised in that** the outline (19) of the semicircular curve (15, 16) of a vertical chain link (10) inserted into the chain sprocket (23) at least approximately defines a chain link circle of curvature with a centre point (21, 22), that the tooth flank line of curvature (45) of the load-carrying tooth flank (39) defines a tooth flank circle of curvature with a centre point (46, 47), and that the centre point (46, 47) of the tooth flank circle of curvature is displaced in relation to the centre point (21, 22) of the chain link circle of curvature.

6. Chain sprocket according to claim 5, **characterised in that** the displacement points in the load direction.

7. Chain sprocket according to claim 5, **characterised in that** the connecting line between the two centre points (21, 46; 22, 47) runs parallel to the straight sections (13, 14) of the vertical chain link (10).

8. Chain sprocket according to claim 5, **characterised in that** the connecting line between the two centre points (21, 46; 22, 47) runs at an acute angle to the longitudinal axes of the straight sections (13, 14) of the vertical chain link (10).

9. Chain sprocket according to claim 5, **characterised in that** the connecting line between the two centre points (21, 46; 22, 47) runs at a right angle to the longitudinal axes of the straight sections (13, 14) of the vertical chain link (10).

10. Chain sprocket according to claim 5, **characterised in that** the distance between the centre points (21, 46; 22, 47) of the circles of curvature lies between 0.06-times and 0.1-times, preferably between 0.082-times and 0.096-times the wire diameter of the chain link (10).

11. Chain sprocket according to claim 1, **characterised in that** the tooth flank line of curvature (45) is exactly circular.

12. Chain sprocket according to claim 1, **characterised in that** the tooth flank line of curvature (45) has the same course as the outline (19) of the semicircular curve (15) adjacent to the load-carrying tooth flank (39) of a chain link (10) loaded with a nominal load.

13. Chain sprocket according to claim 1, **characterised in that** it is made from a hardened, preferably case-hardened, or untreated steel.

14. Chain sprocket according to claim 1, **characterised in that** it contains a corrugated hole (27), with which it can be attached to an output shaft of a geared motor (2, 3) to be fixed against rotation.

15. Chain sprocket according to claim 1, **characterised in that** the chain recesses (28) are tub-shaped for the horizontal chain links (10).

16. Chain sprocket according to claim 1, **characterised in that** the chain recess (35) for the vertical chain links (10) is defined by the load-carrying tooth flank (39), a tooth flank (41) of an adjacent tooth (36) located opposite the load-carrying tooth flank (39) and a recess base (38).

17. Chain sprocket according to claim 16, **characterised in that** the recess base (38) is curved, wherein its axis of curvature lies at right angles to the rotational axis.

18. Chain sprocket according to claim 16, **characterised in that** the recess base (38) is plane.

19. Chain sprocket according to claim 16, **characterised in that** the recess base (38) has a depression (42) in the centre to leave space for a weld (12) of the chain link (10).

20. Chain sprocket according to claim 1, **characterised in that** the radius of the circle of curvature of the tooth flank line of curvature (45) is larger than the radius of the circle of curvature of the outline (19) of the semicircular curve (15, 16).

21. Chain sprocket according to claim 20, **characterised in that** the ratio of the radii lies between 0.08-times and 0.3-times the wire diameter.

22. Chain sprocket according to claim 20, **characterised in that** the ratio of the radii lies between factor 1.0 and factor 1.2.

23. Chain sprocket according to claim 1, **characterised in that** the load-carrying tooth flank (39) merges into a bevel surface in the direction of the tooth point.

24. Chain sprocket according to claim 23, **characterised in that** the height of the bevel surface lies between 0.1 mm and 1.5 mm, depending on the wire diameter of the chain link (10).

25. Chain sprocket according to claim 1, **characterised in that** the chain sprocket (23) is a one-piece shaft journal.

26. Chain sprocket according to claim 1, **characterised in that** in the region projecting radially over the recess base (38) for a horizontal chain link (10), the teeth (36) have a width, which is only slightly smaller than the clearance between the straight sections (13, 14) of the chain link (10).

27. Chain sprocket according to claim 1, **characterised in that** with a predetermined tensile stress of more than 0 N/mm², preferably between 100% and 75% of the engineering stress of the link chain (8), the space between the tooth flank line of curvature (45) and the outline (19) of the semicircular curve (15, 16) disappears.

28. Chain sprocket according to claim 27, **characterised in that** the engineering stress amounts to between 320 N/mm² and 80 N/mm², preferably 200 N/mm² and 100 N/mm².

29. Chain sprocket according to claim 27, **characterised in that** the engineering stress is calculated from the nominal carrying capacity of the chain drive without taking into consideration a dynamic component and the wire cross-section of the chain link.

## Revendications

1. Pignon à chaîne (23) destiné à entraîner des chaînes à maillons (8), telles que des chaînes à maillons ronds ou des chaînes en acier profilé, en particulier de palans à chaîne (1), chaque maillon (10) étant constitué d'un fil métallique courbé et présentant une forme plane qui se compose de deux portions (13, 14) mutuellement parallèles et de deux arcs en demi-cercles (15, 16),
comprenant un corps de base (24) qui présente une surface périphérique extérieure (26) et un axe de rotation,
comprenant des logements pour chaîne (28) qui se situent dans la surface périphérique extérieure (26) et sont conçus pour recevoir les maillons (10) horizontaux et pour transmettre la force du pignon à chaîne (23) aux maillons (10) horizontaux,
comprenant des logements pour chaîne (35),
- qui se situent dans la surface périphérique extérieure (26),
- qui sont conçus pour recevoir les maillons (10) verticaux,
- dont le nombre correspond au nombre de logements pour chaîne (28) pour les maillons horizontaux,
- qui présentent chacun des zones d'appui (38) pour les maillons verticaux, sur lesquelles le maillon (10) concerné est en appui au moins avec une partie de sa portion rectiligne qui se raccorde à l'arc de cercle (15, 16), et
- dont un est disposé chaque fois entre des logements pour chaîne (28) voisins pour les maillons (10) horizontaux, en coupant ces logements (28), et comprenant des dents (36),
- dont une est disposée chaque fois entre deux logements pour chaîne (35) voisins pour les maillons (10) verticaux,
- qui sont conçues pour transmettre la force du pignon à chaîne (23) aux maillons (10) verticaux, et
- qui sont chacune délimitées par deux flancs de dent (39, 41) orientés dans la direction périphérique,
au moins un des deux flancs (39) de chaque dent (36), en tant que flanc (39) supportant la charge, étant orienté dans le sens opposé au sens de la charge dans la chaîne à maillons (8), lorsque le pignon à chaîne (23) est en service, chaque flanc de dent (39) de support de charge définissant, dans le plan de
symétrie des logements (35) pour les maillons (10) verticaux qui est perpendiculaire à l'axe de rotation, une ligne de courbure de flanc de dent (45) qui correspond au moins approximativement au tracé courbe du contour extérieur (45) de l'arc en demi-cercle (15) contigu, orienté dans le sens de la charge, d'un maillon (10) vertical se trouvant dans le logement pour chaîne (35) associé, et
la position du flanc de dent (39) qui supporte la charge étant dimensionnée de manière telle que sa ligne de courbure de flanc de dent (45), mesurée dans le plan de symétrie, présente, au moins à proximité du sommet de la dent, une distance par rapport au contour extérieur (19), orienté dans le sens de la charge, de l'arc en demi-cercle (15, 16) d'un maillon (10) vertical se trouvant dans le logement pour chaîne (35) associé, lorsque les deux maillons (10) horizontaux voisins sont centrés et reposent dans leurs logements (28) associés, sans l'action d'une force extérieure, et qu'il n'y a pas de jeu entre les maillons (10).

2. Pignon à chaîne selon la revendication 1, **caractérisé par le fait que** la dent (36), au-dessus d'une surface définie par la surface de flanc du maillon (10) horizontal qui est contiguë à l'axe de rotation, présente une hauteur qui est comprise entre 0,16 et 0,75 fois l'épaisseur du maillon.

3. Pignon à chaîne selon la revendication 1, **caractérisé par le fait que** le flanc de dent (39) supportant la charge présente une courbure biaxiale.

4. Pignon à chaîne selon la revendication 3, **caractérisé par le fait que** l'autre courbure présente un rayon qui n'est pas inférieur à la moitié du diamètre du fil métallique à partir duquel est réalisé le maillon (10).

5. Pignon à chaîne selon la revendication 1, **caractérisé par le fait que** le contour extérieur (19) de l'arc en demi-cercle (15, 16) d'un maillon (10) vertical placé dans le pignon à chaîne (23) définit au moins approximativement un cercle osculateur de maillon avec un centre (21, 22), **par le fait que** la ligne de courbure (45) du flanc de dent (39) supportant la charge définit un cercle osculateur de flanc de dent avec un centre (46, 47), et **par le fait que** le centre (46, 47) du cercle osculateur de flanc de dent est décalé par rapport au centre (21, 22) du cercle osculateur de maillon.

6. Pignon à chaîne selon la revendication 5, **caractérisé par le fait que** le décalage est orienté dans le sens de la charge.

7. Pignon à chaîne selon la revendication 5, **caractérisé par le fait que** la droite de liaison entre les deux centres (21, 46; 22; 47) est parallèle aux portions (13, 14) rectilignes du maillon (10) vertical.

8. Pignon à chaîne selon la revendication 5, **caractérisé par le fait que** la droite de liaison entre les deux centres (21, 46; 22, 47) forme un angle aigu avec les axes longitudinaux des portions (13, 14) rectilignes du maillon (10) vertical.

9. Pignon à chaîne selon la revendication 5, **caractérisé par le fait que** la droite de liaison entre les deux centres (21, 46; 22, 47) forme un angle droit avec les axes longitudinaux des portions (13, 14) rectilignes du maillon (10) vertical.

10. Pignon à chaîne selon la revendication 5, **caractérisé par le fait que** la distance entre les centres (21, 46; 22, 47) des cercles osculateurs est comprise entre 0,06 et 0,1 fois, de préférence entre 0,082 et 0,096 fois, le diamètre du fil métallique du maillon (10).

11. Pignon à chaîne selon la revendication 1, **caractérisé par le fait que** a une forme exactement circulaire.

12. Pignon à chaîne selon la revendication 1, **caractérisé par le fait que** la ligne de courbure de flanc de dent (45) présente le même tracé que le contour extérieur (19) de l'arc en demi-cercle (15), contigu au flanc de dent (39) supportant la charge, d'un maillon (10) soumis à la charge nominale.

13. Pignon à chaîne selon la revendication 1, **caractérisé par le fait qu'**il est réalisé à partir d'acier trempé, de préférence cémenté et trempé, ou d'acier non traité.

14. Pignon à chaîne selon la revendication 1, **caractérisé par le fait qu'**il comporte un alésage pour arbre (27) avec lequel il peut être rapporté de manière solidaire en rotation sur un arbre de sortie d'un motoréducteur (2, 3).

15. Pignon à chaîne selon la revendication 1, **caractérisé par le fait que** les logements pour chaîne (28) destinés aux maillons (10) horizontaux ont une forme de cuvette.

16. Pignon à chaîne selon la revendication 1, **caractérisé par le fait que** les logements pour chaîne (35) destinés aux maillons (10) verticaux sont définis par le flanc de dent (39) supportant la charge, un flanc de dent (41) d'une dent (36) voisine situé en vis-à-vis et un fond de logement (38).

17. Pignon à chaîne selon la revendication 16, **caractérisé par le fait que** le fond de logement (38) est incurvé, son axe de courbure étant perpendiculaire à l'axe de rotation.

18. Pignon à chaîne selon la revendication 16, **caractérisé par le fait que** le fond de logement (38) est plan.

19. Pignon à chaîne selon la revendication 16, **caractérisé par le fait que** le fond de logement (38) présente au milieu un creux (42) destiné à recevoir une soudure (12) du maillon (10).

20. Pignon à chaîne selon la revendication 1, **caractérisé par le fait que** le rayon du cercle osculateur de la ligne de courbure de flanc de dent (45) est supérieur au rayon du cercle osculateur du contour extérieur (19) de l'arc en demi-cercle (15, 16).

21. Pignon à chaîne selon la revendication 20, **caractérisé par le fait que** le rapport entre les rayons est compris entre 0,08 et 0,3 fois le diamètre du fil métallique.

22. Pignon à chaîne selon la revendication 20, **caractérisé par le fait que** le rapport entre les rayons est compris entre le facteur 1,0 et le facteur 1,2.

23. Pignon à chaîne selon la revendication 1, **caractérisé par le fait qu'**en direction du sommet de la dent, le flanc de dent (39) supportant la charge se transforme en surface chanfreinée.

24. Pignon à chaîne selon la revendication 23, **caractérisé par le fait que** la hauteur de la surface chanfreinée est fonction du diamètre du fil métallique du maillon (10) et est comprise entre 0,1 mm et 1,5 mm.

25. Pignon à chaîne selon la revendication 1, **caractérisé par le fait que** le pignon à chaîne (23) présente un tourillon d'arbre réalisé d'une seule pièce.

26. Pignon à chaîne selon la revendication 1, **caractérisé par le fait que** dans la région qui dépasse radialement par rapport au fond de logement (38) destiné à un maillon (10) horizontal, les dents (36) ont une largeur qui n'est que légèrement inférieure à la distance libre entre les portions (13, 14) rectilignes du maillon (10).

27. Pignon à chaîne selon la revendication 1, **caractérisé par le fait que** pour une sollicitation prédéterminée due aux contraintes, supérieure à 0 N/mm², de préférence comprise entre 100 % et 75 % de la contrainte nominale de la chaîne à maillons (8), la distance entre la ligne de courbure de flanc de dent (45) et le contour extérieur (19) de l'arc en demi-cercle (15, 16) disparaît.

28. Pignon à chaîne selon la revendication 27, **caractérisé par le fait que** la contrainte nominale est comprise entre 320 N/mm² et 80 N/mm², de préférence entre 200 N/mm² et 100 N/mm².

29. Pignon à chaîne selon la revendication 27, **caractérisé par le fait que** la contrainte nominale est calculée à partir de la charge admissible nominale de la transmission par chaîne, sans tenir compte d'une composante dynamique ni de la section du fil métallique du maillon.
